# EUROPEAN PATENT SPECIFICATION

(11) **EP 0 770 325 B1**
(45) Date of publication and mention of the grant of the patent: **06.10.1999**
(21) Application number: 96650045.6
(22) Date of filing: 29.10.1996
(51) Int. Cl.: A01K 1/01

(54) **A slurry scraper system**
Mistschieberanlage
Racleur de lisier

(30) Priority: 26.10.1995 IE 950838
(43) Date of publication of application: 02.05.1997
(73) Proprietor: O'Donovan, John, County Cork (IE)
(72) Inventor: O'Donovan, John, County Cork (IE)
(74) Representative: O'Brien, John Augustine

(56) References cited:
- FR-A- 2 312 949
- FR-A- 2 316 489
- GB-A- 1 273 930
- GB-A- 2 265 293

## Description

The invention relates to a slurry scraper system of the type comprising:-
a reciprocating rail having drive dogs, and an actuator for the rail;
a carriage carrying scraper blades; and
a pawl pivotally mounted on the carriage to engage the drive dogs at an angle to vertical to cause the rail to drive the carriage, to disengage from a drive dog when the carriage encounters an obstruction, and to change orientation at the end of the rail to reverse drive direction.

Such a system is described in my British Patent Specification No. GB2265293B. Major advantages of this system include the fact that it provides both forward and reverse drive with automatic change of direction at the end of a sweep in a very simple manner. Another important feature is the safety aspect of mechanical tripping whereby the pawl disengages from the rail when the scraper encounters an obstruction. The pawl effectively pivots about the drive dog to lift the carriage upwardly for disengagement.

However, there are some situations where problems arise. For example, where the passage is quite long and there is a large build-up of slurry on the forward sweep, the slurry can cause the carriage to trip. This can sometimes be a nuisance for farmers, and discourages use of the system in favour of systems which do not have a safety tripping feature.

Another problem which has been encountered is that, particularly in warmer climates, the slurry can become caked on the rail, thus causing the pawl to slip over the drive dog and not achieve positive engagement to drive the carriage. This can also be very inconvenient for farmers.

The invention is characterised in that
the pawl comprises a sharp edge at its lower extremity for removal of slurry on the rail adjacent to the drive dogs as it engages the drive dogs.

This is a very simple and effective way of solving the problems caused by hardening of slurry on the rail in warm weather conditions. There are no additional components required as the pawl itself cleans the rail.

In one embodiment, the system further comprises a bias means pressing the pawl down to assist in the cleaning action of the pawl. Use of a bias means in this manner greatly improves effectiveness of the self-cleaning action, again in a very simple manner.

The invention will be more clearly understood from the following description of some embodiments thereof, given by way of example only with reference to the accompanying drawings in which:-
Fig. 1 is a perspective view from above of a slurry scraper system installed in a cattle parlour;
Fig. 2 is a front view of a control unit of the system;
Fig. 3 is a diagrammatic partly cut-away perspective view illustrating the manner in which a rail drives a carriage of the system;
Figs. 4 and 5 are front and side views respectively of a pawl of the carriage;
Figs. 6 and 7 are front and side views respectively of a spring of the carriage; and
Figs. 8(a) to 8(f) respectively are diagrammatic side views illustrating the manner in which the rail drives the carriage in various positions.

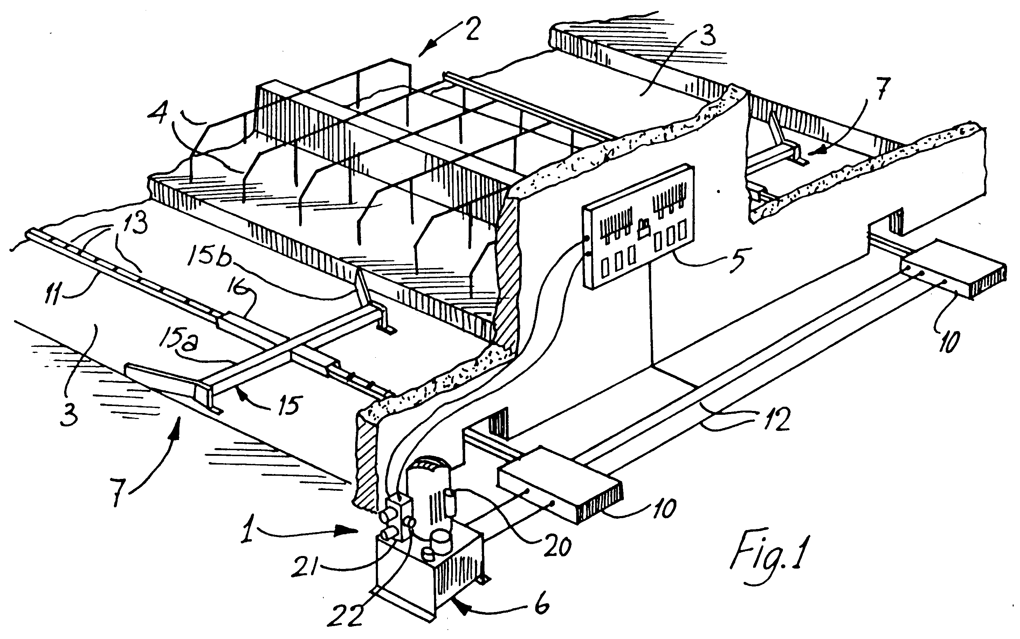

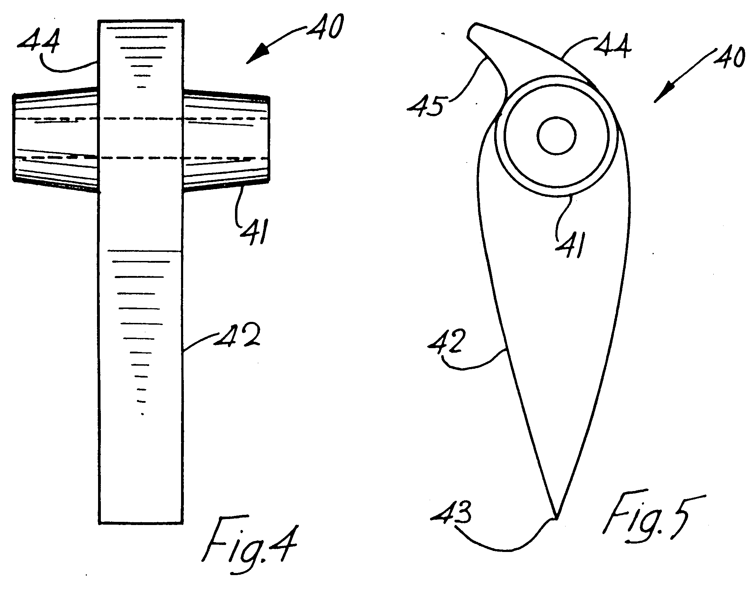

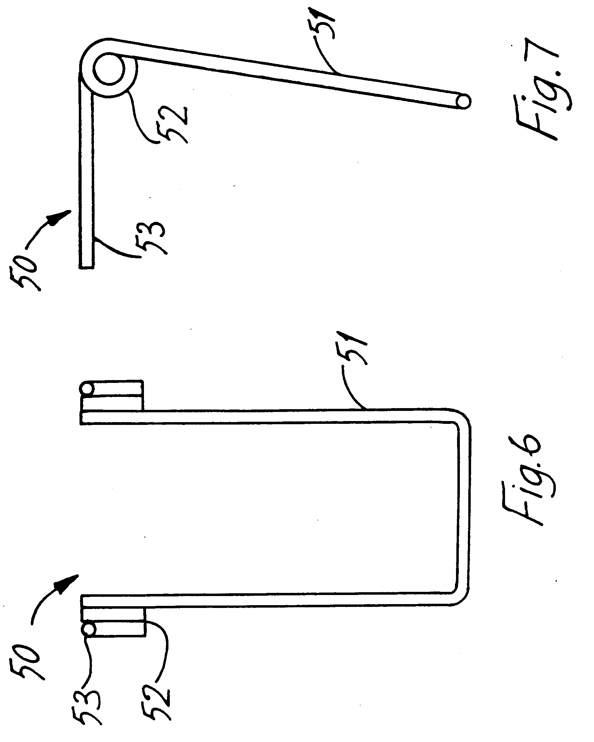

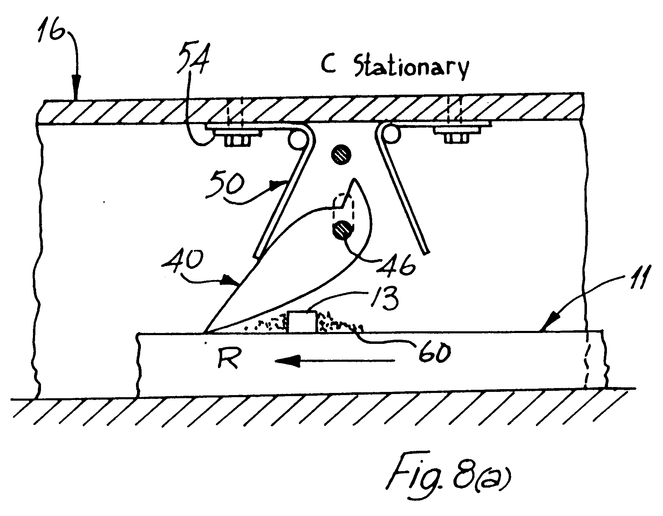

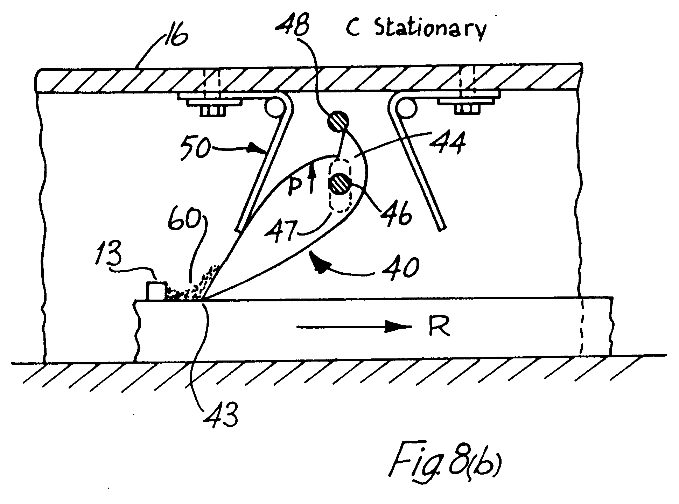

Referring to the drawings, and initially to Figs. 1 to 7 there is illustrated a slurry scraper system 1 of the invention. In Fig. 1 the system 1 is shown installed in a cattle parlour 2 having six passages 3, on each side of which there are cattle pens 4.

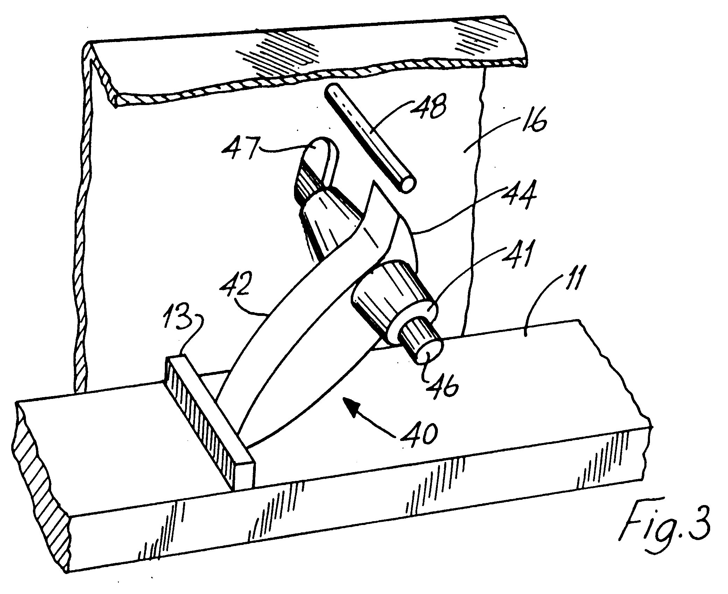

The system 1 comprises an electronic control unit 5 connected to an hydraulic power plant 6. There is a scraper unit 7 in each of the six passages 3. Each scraper unit 7 comprises an hydraulic drive 10 driving a reciprocating rail 11 mounted centrally in the associated passage 3. The hydraulic drive 10 receives hydraulic power via hydraulic lines 12 and electrical control signals from the control unit 5. As shown most clearly in Fig. 3, each rail 11 has a series of drive teeth or dogs 13.

Each scraper unit 7 also comprises a carriage 16 of inverted channel shape mounted over the rail 11. The carriage 16 supports scrapers 15, namely a transverse scraper 15(a) and a pair of outer splayed scrapers 15(b).

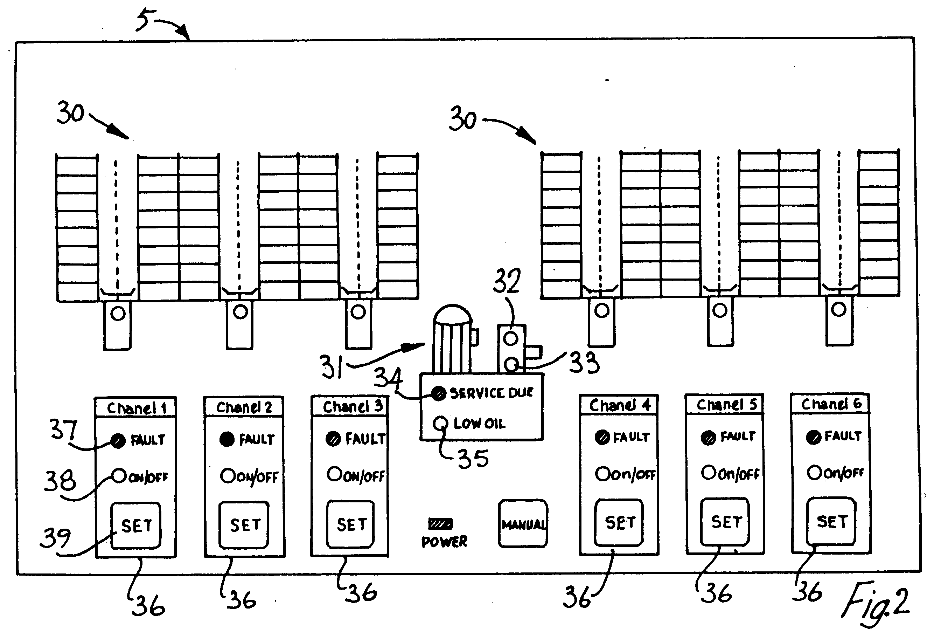

Referring in particular to Figs. 1 and 2, the power plant 6 comprises an hydraulic motor 20 for which there is an hydraulic output valve 21 supplying power to the lines 12.

The valve 21 alternately provides forward and reverse hydraulic power on the lines 12, one line 12 always providing forward power and the other reverse. The control unit 5 operates each drive 10 in sequence by use of solenoid valves. Means for sensing pressure in the lines is provided by a pressure switch 22 on the valve 21.

Fig. 2 illustrates the front panel of the control unit 5 on which there are representations 30 of the parlour and representations 31 of the power plant. A light emitting diode (LED) 32 indicates whether or not hydraulic power is being sensed, and an LED 33 indicates whether or not there is a fault in the sensing arrangement. An LED 34 indicates if a service is due, and an LED 35 indicates if oil level is low. The control unit 5 also has a sub-panel 36 relating to each of the scraper units 7. Each sub-panel 36 includes a fault LED 37, an on/off LED 38, and a SET key 39.

Referring in particular to Figs. 3 to 8, the manner in which the reciprocating rail 11 drives the carriage 16 is now illustrated. The carriage 16 has a pawl 60 having a sleeve 41, on the lower side of which there is a pawl body 42 which engages the rail. At the lower extremity of the pawl 40 there is a relatively sharp edge 43 and it will be noted that the shape of the pawl body in side view gradually tapers downwardly and inwardly towards this edge. The pawl 40 also has an upper extension 44 having a stop face 45 and an opposed curved face. The extension 44 is inclined to one side with respect to the body 42.

The pawl 40 is suspended on a pivot pin 46 which extends through the sleeve 41 and engages opposed vertical slots 47 in the side walls of the carriage 16.

A removable stop pin 48 is mounted directly above the slots 47 across the carriage 16.

A control means for preventing pivotal movement of the pawl 40 to disengage from a drive dog 13 in one direction of movement of the carriage and rail is provided by the slots 47, the extension 44 and the stop pin 48. How they operate to achieve this effect is described below.

The carriage 16 also comprises a pair of torsion springs 50, each having a U-shaped spring body 51 for engagement with the pawl. Each of the springs 50 also has a pair of torsion coils 52 extending out as support legs 53 which are anchored on the upper horizontal wall of the carriage 16 by a support bracket 54. For clarity, the springs 50 are not shown in Fig. 3.

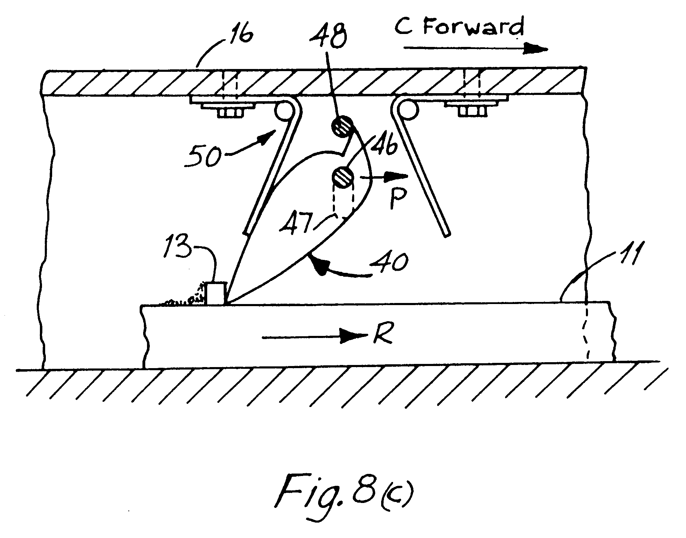

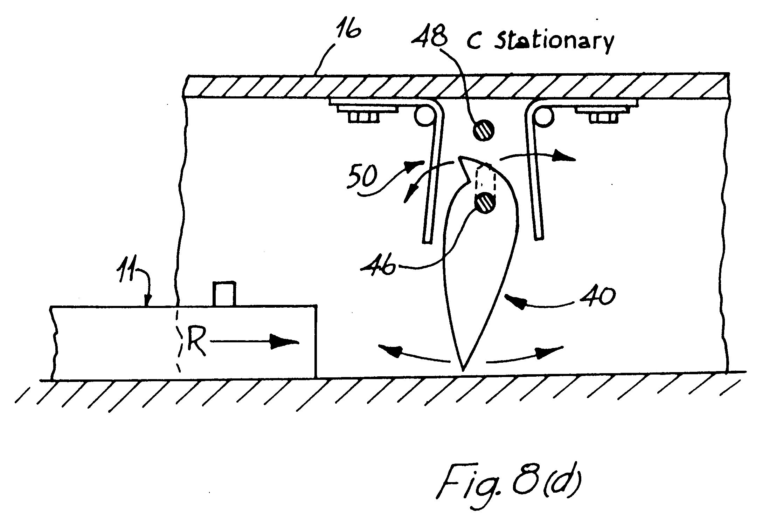

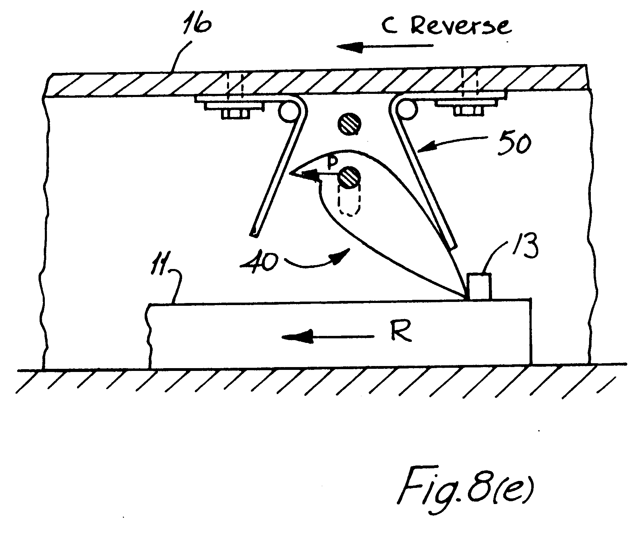

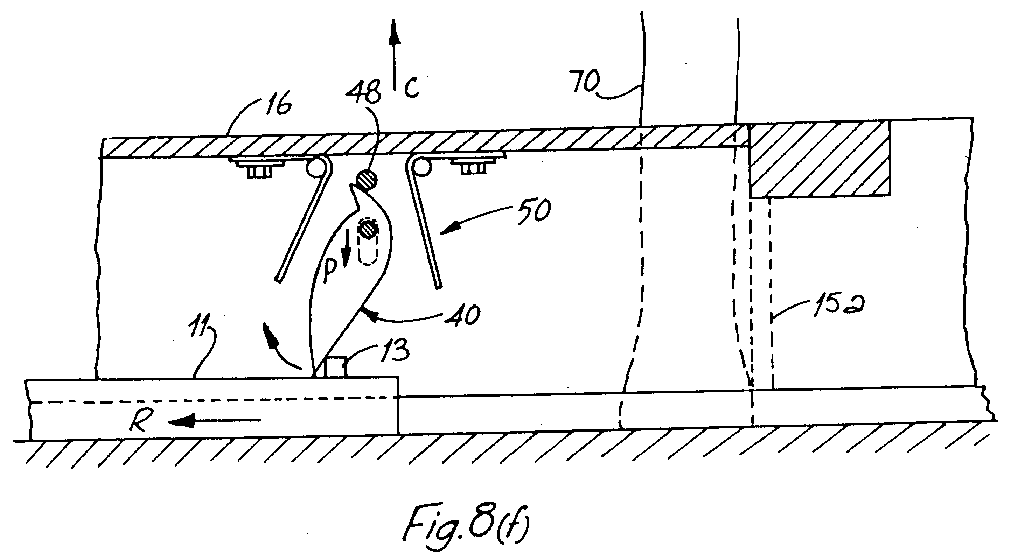

Referring now to Figs. 8(a) to 8(f), operation of the system is now described in detail. The operator inputs instructions at the control unit 5 to activate the system 1. The control unit 5 transmits instructions to the power plant 6 causing it to provide hydraulic power for the drives 10. The power which is provided to a particular drive 10 is forward hydraulic pressure followed by reverse hydraulic pressure. This allows a double-acting hydraulic ram within each drive 10 to drive the rail 11 in a reciprocating motion having forward and reverse strokes. All drives 10 receive power from the plant 6, however only one is activated by the control unit 5 at any time.

Referring to Fig. 8(a), the rail 11 is shown in a reverse stroke in which a drive dog 13 moves underneath the pawl 40. The pawl 40 in this position is not under any upwardly-directed pressure and simply rests on the rail 11. By virtue of the shape of the pawl 40, this action of the rail tends to sharpen the edge 43 because of the rubbing action. The spring 50 biasses the pawl 42 downwardly against the rail 11. It will be noted that there is caked slurry 60 around the drive dog 13.

As shown in Fig. 8(b), when the dog 13 has passed under the pawl 40, on the next forward rail stroke it engages the pawl 40. This action involves the pawl 40 pressing downwardly on the rail 11 under the bias of the spring 50. This causes the pawl edge 43 to cut through the slurry 60, effectively shaving it off the rail. When the dog 13 reaches the edge 43 the pawl 40 is pushed the final distance upwardly to the upper limit allowed by the slots 47. The impact of the pin 46 against the slots 47 provides a hammer action to help remove any remaining slurry 60. In these drawings, the arrow P indicates movement of the pin 46, C of the carriage 16, and R of the rail 11.

After full engagement of the dog 13 with the pawl 40, the pawl is driven forwardly to he extent of the stroke of the rail 11. This stage is illustrated in Fig. 8(c). At this position, the pawl 40 is not free to disengage from the rail 11 and mechanical safety tripping can not occur. This is because pivoting in the anti-clockwise direction about the pivot pin 46 is prevented by the stop pin 48. However, if an obstruction arises, a change in pressure at the relevant hydraulic drive 10 will be sensed by the sensor 22, which information is captured by the control unit 5. During normal reciprocating motion of the rail 11, the control unit 5 establishes in real time an average hydraulic cylinder stroke time for each rail by timing the reversing switch in the valve 21. The average time is computed from the previous five strokes. If the control unit 5 detects three consecutive fault (short) strokes, it discontinues actuation of the relevant drive 10 and further movement of that rail 11 does not occur. The control unit 5 then activates the LED 37 for that particular passage to indicate the fault. The scraper unit for that passage will not operate until the operator depresses the relevant SET key 39 on the control unit 5. It will thus be appreciated that the system 1 provides for safety for operation of the scraper system in a manner whereby the scraper may not be mechanically tripped during the forward sweep. This allows cleaning of lengthy passages where there may be a large accumulation of slurry, with required safety. An important point to note is that this control feature may be disabled simply by removing the stop pin 48 (which comprises a conventional bolt mounted across the carriage 16). Thus, the feature of preventing disengagement for the forward sweep is completely optional for the farmer and a decision may be made based on the expected level of slurry to be scraped. When the mechanical tripping feature is used, the hydraulic safety feature provides an important backup in the event that an animal is lying on the carriage or blades, thus preventing mechanical tripping.

Referring now to Fig. 8(d) the position of the carriage is illustrated when it reaches the end of the rail at the end of the passage 3. When the rail 11 reverses back, the pawl 40 is freely suspended above the ground. The pawl 40 is free to rotate because the pin 46 has dropped to its lowermost position in the slots 47 and therefore the stop pin 48 does not come into play. On the next forward stroke of the rail, the rail and the last drive dog 13 push the pawl in the anti-clockwise direction so that it lies on the rail, still at its most lowermost position in the slots 47. On the next reverse stroke of the rail 11, the last drive dog 13 engages the pawl 40 as illustrated in Fig. 8(e). This begins the reverse sweep of the carriage back along the passage to its home position closest to the hydraulic drive 10. During this sweep, the blades 15 will not be pushing slurry and there is no danger of an accumulation of slurry causing it to inadvertently trip. The control means comprising the slots 47, the extension 44 and the stop pin 48 are configured to allow tripping during the reverse sweep. This is illustrated in Fig. 8(f). When an obstruction such as an animal leg is encountered, the carriage 16 is no longer free to move in the reverse sweep direction. The drive dog 13 pushes the pawl so that the pawl in effect pivots about the drive dog 13. During this action, the pawl pivot pin 46 pushes the carriage upwardly via the upper edges of the slots 47. At a stage in this motion the curved face of the extension 44 rubs against the stop pin 48. However, because of its curvature, this contact does not prevent further rotation and the extension piece 44 slides under the stop pin 48 using the freedom of movement of the pawl pivot pin 46 in the slots 47 to complete the motion. The arrow P indicates the slight downward motion of the pin 46 with respect to the slots 47.

When the carriage and rail are engaged again, the rail moves the carriage in the remainder of the reverse sweep back to the home position at the end of the passage closest to the drive 10. This position is detected by a limit switch. The scraper unit 7 may be activated again in response to user instructions, or automatically after a pre-programmed time interval has elapsed. For example, each scraper unit 7 may be activated every three hours.

Thus, it will be appreciated that there is mechanical tripping for disengagement of the carriage from the rail during the reverse sweep to provide safety for animals in a very simple and effective manner. Of course, the hydraulic safety features are also provided during the reverse sweep for additional safety.

If, for some reason, the farmer chooses to disable tripping on the reverse sweep, but not on the forward sweep he must simply reverse the orientation of the pawl 40. This is a very simple operation as the pawl pivot pin 46 is a bolt which may be easily removed from the carriage. Thus, the farmer has complete versatility - the tripping disabling feature may be provided for either direction by reversing the pawl 40, or may be disabled completely by simply removing the stop pin 48.

It will also be appreciated that the invention provides for very effective self-cleaning of the rail to ensure that there is always effective engagement between the rail and the pawl. This has been achieved in an extremely simple manner. The pawl 40 is also self-sharpening by the manner in which it rubs against the rail 11 so that the self-cleaning feature is maintained during the life of the system.

It is envisaged that the self-cleaning features of the invention may be provided without the feature of preventing tripping in one direction. For example, the pawl may be mounted as in the prior art on a fixed pivot and without any stop member.

## Claims

1. A slurry scraper system (1) of the type comprising:-
a reciprocating rail (11) having drive dogs (13) and an actuator (5,6,10) for the rail;
a carriage (16) carrying scraper blades (15); and
a pawl (40) pivotally mounted on the carriage (16)to engage the drive dogs (13) at an angle to vertical to cause the rail (11) to drive the carriage (16), to disengage from a drive dog when the carriage encounters an obstruction, and to change orientation at the end of the rail to reverse drive direction, characterised in that,
the pawl comprises a sharp edge (43) at its lower extremity for removal of slurry on the rail adjacent to the drive dogs as it engages the drive dogs.

2. A slurry scraper system as claimed in claim 1, further comprising a bias means (50) pressing the pawl (40) down to assist in the cleaning action of the pawl.

3. A slurry scraper system as claimed in claim 2, wherein the bias means comprises means (50) for acting on the pawl (40) in both engagement positions.

4. A slurry scraper system as claimed in claims 2 or 3, wherein the bias means comprises a torsion spring anchored on the carriage (16) and acting about an axis parallel to the axis of the pawl.

5. A slurry scraper system as claimed in claim 4, wherein the bias means comprises a pair of torsion springs (50), one on each side of the pawl in the direction of travel.

6. A slurry scraper system as claimed in any preceding claim, wherein the pawl is pivotally mounted on the carriage (16) by a floating pivot.

7. A slurry scraper system as claimed in claim 6, wherein the floating pivot comprises a pawl pivot pin (46) engaging a slot (47) in the carriage.

8. A slurry scraper system as claimed in claim 7, wherein the pawl pivot pin (46) engages a pair of opposed slots (47) in the carriage.

## Patentansprüche

1. Schlammabschabersystem (1) der Art, die folgendes umfaßt:
eine sich hin- und herbewegende Schiene (11) mit Mitnehmeransätzen (13) und einem Stellantrieb (5, 6, 10) für die Schiene;
einen Schlitten (16), der Schabblätter (15) trägt; und
eine Klaue (40), die schwenkbar auf dem Schlitten (16) montiert ist, um an den Mitnehmeransätzen (13) in einem Winkel zur Vertikalen zum Antreiben des Schlittens (16) mittels der Schiene (11) anzugreifen, um sich von einem Mitnehmeransatz zu lösen, wenn der Schlitten auf ein Hindernis stößt, und um am Ende der Schiene die Ausrichtung zum Umkehren der Antriebsrichtung zu wechseln, dadurch gekennzeichnet, daß
die Klaue eine scharfe Kante (43) an ihrem unteren Ende aufweist, um Schlamm auf der Schiene neben den Mitnehmeransätzen zu beseitigen, wenn sie an den Mitnehmeransätzen angreift.

2. Schlammabschabersystem nach Anspruch 1, ferner umfassend ein Vorspannmittel (50), das die Klaue (40) nach unten drückt, um die Reinigungswirkung der Klaue zu unterstützen.

3. Schlammabschabersystem nach Anspruch 2, bei dem das Vorspannmittel ein Mittel (50) aufweist, das in beiden Angreifpositionen auf die Klaue (40) wirkt.

4. Schlammabschabersystem nach Anspruch 2 oder 3, bei dem das Vorspannmittel eine Verdrehungsfeder aufweist, die an dem Schlitten (16) verankert ist und um eine Achse parallel zur Achse der Klaue wirkt.

5. Schlammabschabersystem nach Anspruch 4, bei dem das Vorspannmittel ein Paar Verdrehungsfedern (50), eine auf jeder Seite der Klaue in Bewegungsrichtung, aufweist.

6. Schlammabschabersystem nach einem der vorherigen Ansprüche, bei dem die Klaue mit einem gleitenden Schwenkpunkt drehbar am Schlitten (16) montiert ist.

7. Schlammabschabersystem nach Anspruch 6, bei dem der gleitende Schwenkpunkt einen Klauendrehstift (46) aufweist, der in einen Schlitz (47) im Schlitten eingreift.

8. Schlammabschabersystem nach Anspruch 7, bei dem der Klauendrehstift (46) in ein Paar gegenüberliegender Schlitze (47) im Schlitten eingreift.

## Revendications

1. Un système à racler les boues liquides (1) du type comportant :
un rail à mouvement alternatif (11) ayant des taquets d'entraînement (13) et un actionneur (5,6,10) pour le rail ;
un chariot (16) qui porte des lames racleuses (15) ; et
un cliquet (40) monté de façon pivotante sur le chariot (16) pour se mettre en prise avec les taquets d'entraînement (13) à un angle, par rapport à la verticale, qui fait que le rail (11) entraîne le chariot (16), pour se dégager d'un taquet d'entraînement quand le chariot rencontre une obstruction et pour changer d'orientation à la fin du rail pour inverser la direction d'entraînement, caractérisé en ce que le cliquet comporte une arête vive (43) en son extrémité inférieure pour enlever la boue liquide sur le rail adjacent aux taquets d'entraînement lorsqu'il se met en prise avec les taquets d'entraînement.

2. Un système à racler les boues liquides selon la revendication 1, qui comporte de plus un moyen de charge initiale (50) qui presse le cliquet (40) vers le bas pour aider l'effet de nettoyage du cliquet.

3. Un système à racler les boues liquides selon la revendication 2, dans lequel le moyen de charge initiale comporte un moyen (50) pour agir sur le cliquet (40) dans les deux positions de mise en prise.

4. Un système à racler les boues liquides selon la revendication 2 ou 3, dans lequel le moyen de charge initiale comporte un ressort de torsion ancré sur le chariot (16) et qui agit autour d'un axe parallèle à l'axe du cliquet.

5. Un système à racler les boues liquides selon la revendication 4, dans lequel le moyen de charge initiale comporte une paire de ressorts de torsion (50), un de chaque côté du cliquet dans la direction de déplacement.

6. Un système à racler les boues liquides selon l'une quelconque des revendications précédentes, dans lequel le cliquet est monté de manière pivotante sur le chariot (16) par un pivot flottant.

7. Un système à racler les boues liquides selon la revendication 6, dans lequel le pivot flottant comporte une goupille de pivotement du cliquet (46) qui se met en prise avec une encoche (47) dans le chariot.

8. Un système à racler les boues liquides selon la revendication 7, dans lequel la goupille de pivotement du cliquet (46) se met en prise avec une paire d'encoches opposées (47) dans le chariot.
